# EUROPEAN PATENT APPLICATION

(11) **EP 4 478 510 A1**
(43) Date of publication of application: **18.12.2024**
(21) Application number: 23784938.5
(22) Date of filing: 03.04.2023
(51) Int. Cl.: H01M 50/242, H01M 50/233, H01M 10/6555, H01M 10/613, H01M 10/42, H01M 10/647, H01M 50/211, G01N 21/88, G01B 11/06

(54) **SECONDARY BATTERY MODULE AND SECONDARY BATTERY PACK COMPRISING SAME**

(30) Priority: 07.04.2022 KR 20220043661; 29.03.2023 KR 20230041306
(71) Applicant: LG Energy Solution, Ltd., Seoul 07335 (KR)
(72) Inventor: KIM, Joo Sung, Daejeon 34122 (KR); JUNG, Hun Woo, Daejeon 34122 (KR); YU, Sung Chun, Daejeon 34122 (KR)
(74) Representative: Goddar, Heinz J.
(86) International application number: PCT/KR2023/004455
(87) International publication number: WO 2023/195713

(57) **Abstract**

The present invention relates to a secondary battery module, a secondary battery pack including the same, and a secondary battery module inspection device for inspecting the secondary battery module, and more particularly, to a secondary battery module including a plurality of secondary batteries, a secondary battery pack including the same, and a secondary battery module inspection device for inspecting the secondary battery module.

The present invention provides a secondary battery module including: a plurality of secondary batteries arranged in parallel to each other; and a plurality of buffer pads inserted to be adjacent to the secondary batteries along an arrangement direction of the plurality of secondary batteries, wherein the plurality of buffer pads are provided to have thicknesses different from each other and are selectively inserted according to thicknesses of the adjacent secondary batteries.

## Description

### TECHNICAL FIELD

### CROSS-REFERENCE TO RELATED APPLICATION

The present application claims the benefit of the priority of Korean Patent Application Nos. 10-2022-0043661, filed on April 07, 2022, and 10-2023-0041306, filed on March 29, 2023, which are hereby incorporated by reference in their entirety.

### TECHNICAL FIELD

The present invention relates to a secondary battery module, a secondary battery pack including the same, and a secondary battery module inspection device for inspecting the secondary battery module, and more particularly, to a secondary battery module including a plurality of secondary batteries, a secondary battery pack including the same, and a secondary battery module inspection device for inspecting the secondary battery module.

### BACKGROUND ART

In recent, secondary batteries have attracted considerable attention as power sources for electric vehicles (EVs), hybrid electric vehicles (HEVs), and the like, which have been developed to solve limitations, such as air pollution, caused by existing gasoline and diesel vehicles that use fossil fuels.

While one or two to three or four secondary batteries are used in a small mobile device, a battery module in which a plurality of secondary battery cells are electrically connected to each other, or a battery pack in which a plurality of battery modules are electrically connected to each other is used due to needs for high power and large capacity in medium and large devices such as the electric vehicles.

For example, the battery module may be constituted by a secondary battery assembly that is an assembly of secondary batteries, a busbar (or metal plate) for connecting the secondary batteries in series and/or parallel, a sensing assembly for sensing a voltage and temperature, an electric component for controlling charging/discharging, and a module housing for accommodating the above components. Among the currently commercialized secondary batteries, one of the most spotlighted secondary batteries may be lithium secondary batteries, which are capable of being classified into can-type secondary batteries and pouch-type secondary batteries according to their shapes of exterior materials. Among them, the pouch-type secondary batteries are being widely used in medium and large-sized battery modules because of their high energy density and easy stacking.

However, since the pouch-type secondary battery is generally provided in a shape in which an electrode assembly is embedded in the form of an aluminum laminate sheet, it has an advantage of having high energy density, but has a disadvantage of having weak mechanical strength. Particularly, in the case of a pouch-type secondary battery, an electrode may become thick during repetitive charging/discharging processes, or an internal electrolyte may be decomposed as a side reaction to generate a gas. Here, a phenomenon in which the pouch-type secondary battery is swelled due to the electrode expansion and/or the generated gas is referred to as a 'swelling phenomenon'. For reference, the swelling phenomenon is largely caused by factors due to the electrode expansion during the charging/discharging.

When the swelling phenomenon intensifies in the pouch-type secondary battery, not only the performance of the secondary battery module maybe deteriorated, but also an outer appearance of the module housing may be changed, which may adversely affect structural stability of the secondary battery module. Thus, as one of swelling prevention technologies, a technology for distributing expansion force and compensating for an increase in thickness of the secondary battery by adding a buffer pad between the secondary batteries or between the secondary battery and the housing is being applied.

Specifically, the buffer pad may be a foam material having a predetermined thickness, be disposed to be in contact with one surface of the secondary battery, absorb the expansion force of the secondary battery, and be compressed to prevent an impact between the secondary batteries from occurring.

However, in the case of the related art, since the buffer pad applied to the secondary battery module has a uniform thickness without considering the thickness of the secondary battery, there is a problem in that it does not flexibly respond to the swelling of the secondary battery. Particularly, when the secondary battery having a thick thickness is applied to the secondary battery module, there is a problem in that the module mechanical part is damaged due to an insufficient space inside the module even when the buffer pad is compressed maximally.

As a result, it is necessary to develop a technology to solve the above problems.

### DISCLOSURE OF THE INVENTION

### TECHNICAL PROBLEM

The present invention has been made to solve the above problems, and an object of the present invention is to provide a secondary battery module to which pads having various thicknesses is applied to flexibly respond to swelling of a secondary battery.

### TECHNICAL SOLUTION

A secondary battery module according to the present invention includes: a plurality of secondary batteries arranged in parallel to each other; and a plurality of buffer pads inserted to be adjacent to the secondary batteries along an arrangement direction of the plurality of secondary batteries, wherein the plurality of buffer pads are provided to have thicknesses different from each other and are selectively inserted according to thicknesses of the adjacent secondary batteries.

A portion of the plurality of buffer pads may have a thickness different from that of each of the rest of the buffer pads.

A portion of the plurality of secondary batteries may have a has a thickness different from that of each of the rest of the secondary batteries.

Each of the buffer pads may be selectively disposed for each thickness to correspond to the thicknesses of the adjacent secondary batteries.

The buffer pad may be disposed between the plurality of secondary batteries, and the buffer pads may be selectively disposed for each thickness by comparing the sum of the thicknesses of the adjacent secondary batteries with a preset value.

The plurality of buffer pads may include: at least one first buffer pad having a first thickness; and
at least one second buffer pad having a second thickness less than the first thickness.

When the secondary battery has a thickness that is relatively thicker than the other secondary battery, the second buffer pad may be disposed to be adjacent to the secondary battery that is relatively thicker than the other secondary battery, and when the secondary battery has a thickness that is relatively thinner than the other secondary battery, the first buffer pad may be disposed to be adjacent to the secondary battery that is relatively thinner than the other secondary battery.

The first thickness may range of 1 mm to 2 mm.

The second thickness may range of 0.1 mm to 1 mm.

A material of each of the buffer pads may include any one of polyurethane (PU), silicone, aerogel, a composite material of polyurethane + mica, a composite material of silicone + mica, and a composite material of aerogel + mica.

The plurality of buffer pads may have different colors for each thickness.

The secondary battery module may further include a housing in which an accommodation space is defined, wherein the plurality of secondary batteries and the plurality of buffer pads may be accommodated in the accommodation space.

The secondary battery module may further include a cooling plate provided between the plurality of secondary batteries inside the accommodation space to dissipate heat emitted from the secondary batteries.

A secondary battery pack includes a plurality of secondary battery modules arranged to be stacked, wherein each of the secondary battery modules includes: a plurality of secondary batteries arranged in parallel to each other; and a plurality of buffer pads disposed to be adjacent to the secondary batteries along an arrangement direction of the plurality of secondary batteries, wherein the plurality of buffer pads are provided to have thicknesses different from each other and are selectively inserted according to thicknesses of the adjacent secondary batteries.

A portion of the plurality of buffer pads may have a thickness different from that of each of the rest of the buffer pads.

A secondary battery module includes: a plurality of secondary batteries arranged in parallel to each other; and a plurality of buffer pads inserted to be adjacent to the secondary batteries along an arrangement direction of the plurality of secondary batteries, wherein the plurality of buffer pads are provided to have different degrees of elasticity and are selectively inserted according to thicknesses of the adjacent secondary batteries.

A portion of the plurality of buffer pads may have a degree of elasticity that is different from that of each of the rest of the buffer pads.

A portion of the plurality of secondary batteries may have a has a thickness different from that of each of the rest of the secondary batteries.

Each of the buffer pads may be selectively disposed for each degree of elasticity to correspond to the thicknesses of the adjacent secondary batteries.

The buffer pad may be disposed between the plurality of secondary batteries, and the buffer pads may be selectively disposed for each degree of elasticity by comparing the sum of the thicknesses of the adjacent secondary batteries with a preset value.

The plurality of buffer pads may include: at least one first buffer pad having a first degree of elasticity; and at least one second buffer pad having a second degree of elasticity less than the first degree of elasticity.

When the secondary battery has a thickness that is relatively thicker than the other secondary battery, the second buffer pad may be disposed to be adjacent to the secondary battery that is relatively thicker than the other secondary battery, and when the secondary battery has a thickness that is relatively thinner than the other secondary battery, the first buffer pad may be disposed to be adjacent to the secondary battery that is relatively thinner than the other secondary battery.

The plurality of buffer pads may have different colors for each degree of elasticity.

### ADVANTAGEOUS EFFECTS

The present invention may have the effect of preventing the module mechanism part from being damaged while flexibly compensating for the space when the secondary battery is expanded due to the swelling phenomenon by providing the buffer pads having the various thicknesses in the secondary battery module.

In addition, the present invention may have the effect of setting the buffer pads to the different colors for each thickness to determine and detect the buffer pads for each thickness through the color sensor, thereby accurately detecting the assembly failure when the buffer pads having the different thicknesses are misassembled in the secondary battery module.

### BRIEF DESCRIPTION OF THE DRAWINGS

FIG. 1 is a front view illustrating a configuration of a general pouch-type secondary battery.
FIG. 2 is a cross-sectional view illustrating a cross-section of a secondary battery module on an X-Y plane according to Embodiment 1 of the present invention.
FIG. 3 is a cross-sectional view illustrating a cross-section of the secondary battery of FIG. 2 on a Y-Z plane.

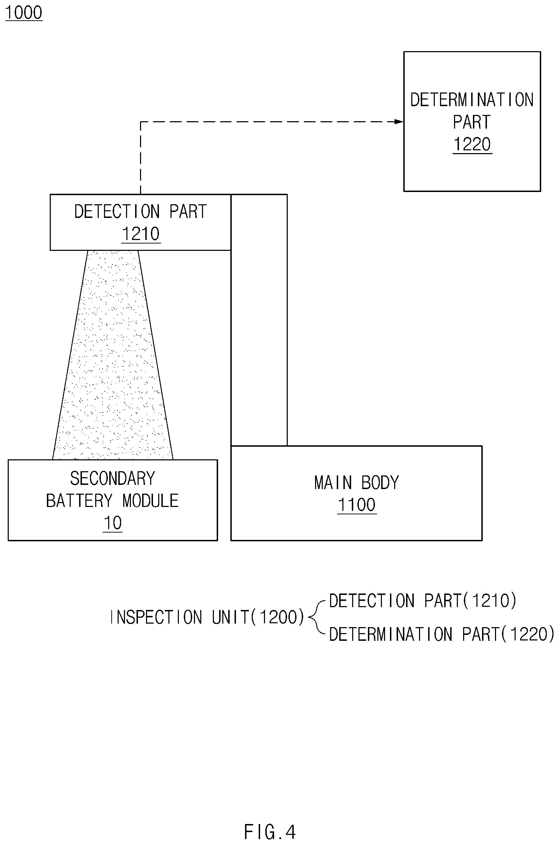

FIG. 4 is a conceptual view illustrating a process of inspecting a secondary battery module using a secondary battery module inspection device according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Secondary battery module

The present invention may include: a plurality of secondary batteries 200 arranged in parallel to each other; and a plurality of buffer pads 300 disposed adjacent to the secondary batteries 200 in an arrangement direction of the plurality of secondary batteries 200, and the plurality of buffer pads 300 may have different thicknesses. The plurality of buffer pads 300 are selectively inserted according to the thicknesses of the adjacent secondary batteries.

Some of secondary battery modules 10 may be provided as a secondary battery module 10 having a thickness different from that of each of the rest of the buffer pads 300.

That is, in the present invention, the plurality of buffer pads 300 may be prepared in three or more types having different thicknesses and be selectively inserted (or disposed) into the buffer pad having an appropriate thickness according to the thickness of the secondary battery. Alternatively, the plurality of buffer pads 300 may be provided in two types having different thicknesses and may be inserted into a buffer pad having an appropriate thickness according to the thickness of the secondary battery.

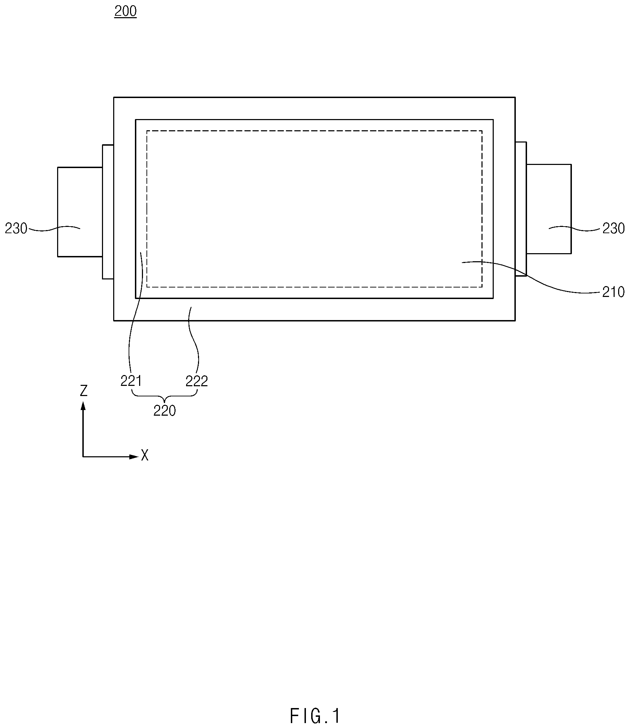

First, as illustrated in FIG. 1, the secondary battery 200 includes an electrode assembly 210 and a battery case 220 accommodating the electrode assembly 210 and may also have various configurations.

Here, the electrode assembly 210 may have a configuration in which positive and negative electrodes and separators are alternately disposed. Specifically, the electrode assembly 210 may have a structure in which positive electrode collector/positive electrode active material layer/separator/negative electrode active material layer/negative electrode collector are sequentially stacked so that the positive electrode active material layer disposed one surface of the separator faces the negative electrode active material layer disposed on the other surface of the separator. Here, it is noted that, in FIG. 1, the electrode assembly 210 is indicated by a dotted line as a configuration accommodated inside the battery case 220.

In addition, the battery case 220 includes an accommodation part 221 in which the electrode assembly 210 is accommodated and an edge part 222 extending along the rim of the accommodation part 221 and may also have various configurations.

Here, the accommodation part 221 may be an area formed concavely to have an empty space so that the electrode assembly 210 described above is accommodated in the battery case 220, an electrolyte together with the above-described electrode assembly 210 may be accommodated in the accommodation part 221.

The edge part 222 may be an area extending along an edge of the accommodation part 221 on the battery case 220. The edge part 222 may have a sealed structure to prevent the electrode assembly 210 accommodated in the accommodation part 221 from being damaged due to exposure to external moisture or air.

One or more electrode leads 230 may protrude from the above-described battery case 220. For example, as illustrated in FIG. 1, a pair of electrode leads 230 may protrude from both ends of the battery case 220. One end of the electrode lead 230 may be electrically connected to the electrode assembly 210, and the other end of the electrode lead 230 may protrude out of the battery case 220 so that the secondary battery 200 is electrically connected to the other secondary battery 200 or an external electric device.

The plurality of secondary batteries 200 provided in one secondary battery module 10 may be provided to have the same thickness or different thicknesses.

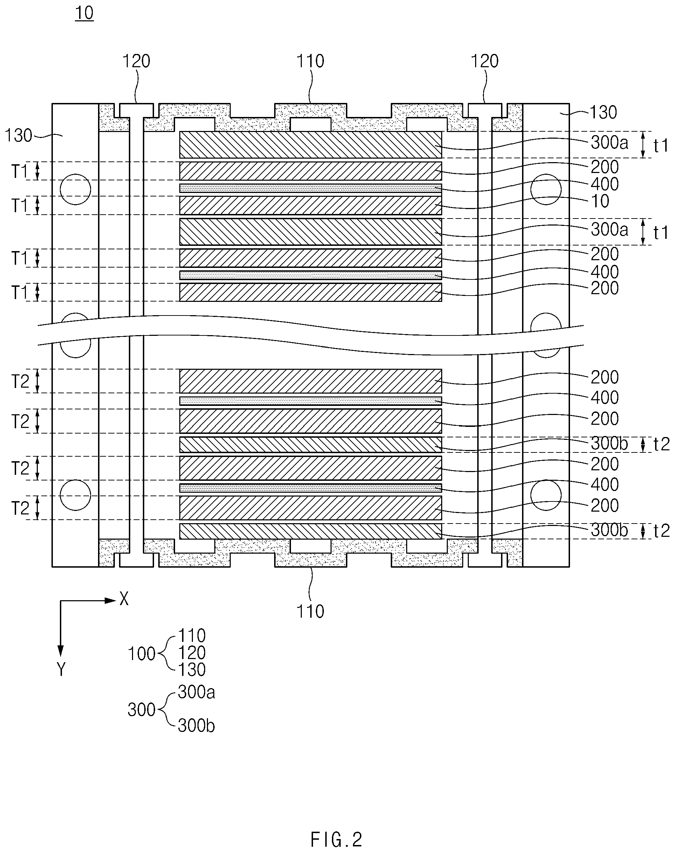

For example, as illustrated in FIG. 2, a portion of the plurality of secondary batteries 200 may have a first thickness T1, and the other of the plurality of secondary batteries 200 may have a second thickness T2 thicker than a first thickness T1 (T1<T2).

Here, the first thickness T1 and the second thickness T2 may be understood as a width of the secondary battery in a Y-direction in FIG. 2. In addition, the first thickness T1 and the second thickness T2 may be variously set. For example, the first thickness T1 may be set to a thickness of 8 mm to 8.2 mm, preferably 8.09 mm. In addition, the second thickness T2 is set to a thickness of 8.2 mm to 8.5 mm, preferably 8.41 mm.

The secondary battery 200 described above may be provided in plurality in the secondary battery module 10. In this case, as illustrated in FIG. 2, the plurality of secondary batteries 200 may be sequentially arranged in parallel along one direction (Y-direction in FIG. 2).

Here, in order to prevent swelling of the secondary battery 200 or damage between the secondary batteries 200 due to an external impact, at least one buffer pad 300 may be arranged between the secondary batteries 200.

Specifically, as illustrated in FIG. 2, the buffer pad 300 may be disposed adjacent to the secondary batteries 200 along the arrangement direction (Y-direction in FIG. 2) of the plurality of secondary batteries 200. In this case, the buffer pad 300 may be disposed between the secondary batteries 200 or between the secondary batteries 200 and a housing 100 to be described later.

The buffer pads 300 may be provided to have various thicknesses. Specifically, the buffer pad 300 may be provided to have various thicknesses ranging of 0.1 mm and 2 mm.

The plurality of buffer pads 300 may be provided to have different thicknesses in one secondary battery module 10. In this case, the buffer pads 300 may be selectively disposed for each thickness to correspond to the thicknesses of the adjacent secondary batteries 200 so that the buffer pads 300 flexibly compensate for the space when the swelling of the secondary battery 200 occurs to prevent the module from being damaged while occupying a predetermined space so that the adjacent secondary batteries 200 are fixed in position.

For example, the plurality of buffer pads 300 may include at least one first buffer pad 300a having a first thickness t1; and at least one second buffer pad 300b having a second thickness t2 less than the first thickness t1.

Here, each of the first thickness t1 and the second thickness t2 may be variously set. For example, the first thickness t1 may range of 1 mm and 2 mm, and the second thickness t2 may range of 0.1 mm and 1 mm.

Specifically, in one secondary battery module 10, each of the first buffer pad 300a and the second buffer pads 300b may be selectively disposed according to the thicknesses of the secondary batteries 200 to be adjacent thereto. In more detail, when the thickness of the secondary battery 200 is relatively thicker than the other secondary battery 200, the second buffer pad 300b may be disposed to be adjacent to the secondary battery 200 that is relatively thicker than the other secondary battery 200.

In addition, when the thickness of the secondary battery 200 is relatively thinner than the other secondary battery 200, the first buffer pad 300a may be disposed to be adjacent to the secondary battery 200 that is relatively thinner than the other secondary battery 200.

In addition, when the one buffer pad 300 is disposed between the two secondary batteries 200, the buffer pads 300 may be selectively disposed for each thickness by comparing the sum of the thicknesses of the adjacent secondary batteries 200 with a preset value.

For example, if the preset value is 16.82 mm, when the sum of the thicknesses of the adjacent secondary batteries 200 is greater than 16.82 mm, the second buffer pad 300b having a relatively thin thickness may be disposed between the secondary batteries 200, and when the sum of the thicknesses of the secondary batteries 200 is less than 16.82 mm, the first buffer pad 300a having a relatively thick thickness may be disposed between the secondary batteries 200.

The buffer pad 300 may be made of various materials. For example, the buffer pad 300 may be made of polyurethane (PU) having vibration absorption and excellent resilience against compression. In addition, the material of the buffer pad includes any one of polyurethane (PU), silicone, aerogel, a composite material of polyurethane + mica, a composite material of silicone + mica, and a composite material of aerogel + mica.

In addition, the plurality of buffer pads 300 may be provided to have different colors for each thickness. In this case, the buffer pad 300 may be detected for each thickness by the color sensor of a secondary battery module inspection device 1000 to be described later. This will be described below in detail.

The secondary battery module 10 according to the present invention may further include a housing 100 having an accommodation space therein.

Here, the housing 100 may have any structure as long as the housing has a structure in which the plurality of secondary batteries 200 and the plurality of buffer pads 300 are accommodated in the accommodation space.

For example, as illustrated in FIG. 2, when the plurality of secondary batteries 200 are stacked in one direction to form a stack of the secondary batteries 200, the housing 100 may include: a pair of endplates 110 disposed on a front or rear surface of the secondary battery 200 disposed at the outermost side of the stack of the secondary batteries 200; a pair of bolt parts 120 extending along the arrangement direction of the plurality of secondary batteries 200 and coupling the pair of endplates 110 to each other; and a body plate 130 connected to an end of the endplate 110 to provide an accommodation space together with the endplate 110.

Here, the endplate 110, the bolt part 120, and the body plate 130 may have various shapes. For example, the body plate 130 may have a ' 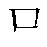 ' shape with a hollow therein.

When the housing 100 is provided, the buffer pad 300 may be disposed between the endplate 110 and the stack of the secondary batteries 200. In this case, the buffer pad 300 may perform spatial compensation to alleviate the swelling and also serve to electrically insulate the secondary battery 200 from the endplate 110.

The secondary battery module 10 according to the present invention may further include a cooling plate 400 provided between the plurality of secondary batteries 200 in the accommodation space to cool heat emitted from the secondary batteries 200. The cooling plate 400 may be provided as a plate-shaped member having thermal conductivity. A refrigerant passage may be provided in the cooling plate 400, or the cooling plate 400 may be directly or indirectly connected to a cooling device provided with the refrigerant passage to dissipate heat emitted from the secondary battery 200.

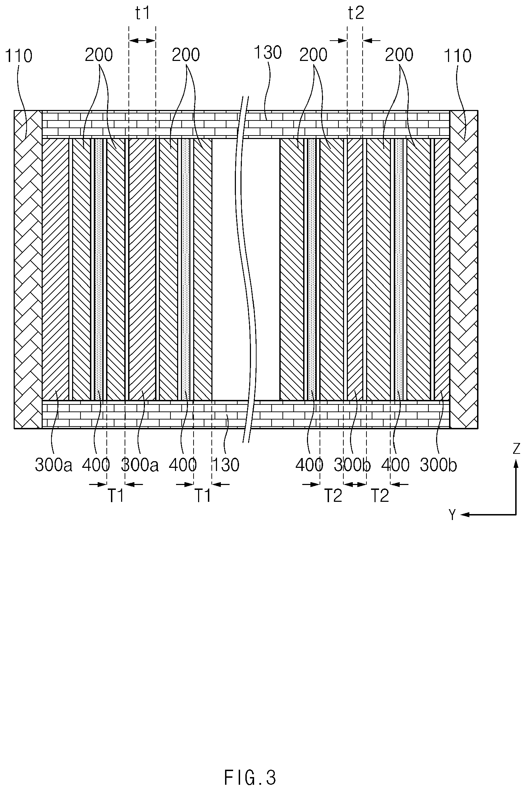

Thus, the secondary battery 200, the first buffer pad 300a, the second buffer pad 300b, and the cooling plate 400 may be alternately arranged in the accommodation space of the housing 100. Here, in FIGS. 2 and 3, the secondary battery 200, the first buffer pad 300a, the second buffer pad 300b, and the cooling plate 400 may not be expressed around an area marked with waves, but these are omitted in the drawings. For example, it may be understood that the secondary battery 200, the first buffer pad 300a, the second buffer pad 300b, and the cooling plate 400 are continuously arranged in the accommodation space inside the housing 100.

In addition, the secondary battery module 10 according to the present invention may further include a cartridge (not shown) in which at least one secondary battery 200 is accommodated. In this case, the secondary battery 200 may be accommodated in the cartridge and arranged along one direction in the accommodation space inside the housing 100. In order to prevent the edge part 222 from being damaged while accommodating the secondary battery 200, the cartridge may have a structure including a frame that has a hollow in which the secondary battery 200 is accommodated and surrounds an edge of the edge part 222.

The present invention may be practiced in another form.

The present invention may include: a plurality of secondary batteries 200 arranged in parallel to each other; and a plurality of buffer pads 300 disposed to be adjacent to the secondary batteries 200 in an arrangement direction of the plurality of secondary batteries 200, and the plurality of buffer pads 300 may have different degrees of elasticity. The plurality of buffer pads 300 are selectively inserted according to the thickness of the adjacent secondary battery.

Some of secondary battery modules 10 may be provided as a secondary battery module 10 having a degree of elasticity different from that of each of the rest of the buffer pads 300.

That is, in the present invention, the plurality of buffer pads 300 may be prepared in three or more types having a different degree of elasticity and be selectively inserted (or disposed) into the buffer pad having an appropriate degree of elasticity according to the thickness of the secondary battery. Alternatively, the plurality of buffer pads 300 may be provided in two types having different degrees of elasticity and may be inserted into a buffer pad having an appropriate degree of elasticity according to the thickness of the secondary battery.

Here, the degree of elasticity is a term indicating an amount of elastic deformation with respect to unit stress. A high degree of elasticity means a small amount of elastic deformation per unit stress, and a low degree of elasticity may mean a large amount of elastic deformation per unit stress. That is, if the degree of elasticity is high, it may be a relatively harder material, and if the degree of elasticity is low, it may be a relatively soft material.

The plurality of secondary batteries 200 provided in one secondary battery module 10 may be provided to have the same thickness or different thicknesses. Here, the secondary battery 200 may be provided in plurality in the secondary battery module 10.

Here, in order to prevent swelling of the secondary battery 200 or damage between the secondary batteries 200 due to an external impact, at least one buffer pad 300 may be arranged between the secondary batteries 200.

Specifically, the buffer pad 300 may be disposed adjacent to the secondary batteries 200 along an arrangement direction of the plurality of secondary batteries 200. In this case, the buffer pad 300 may be disposed between the secondary batteries 200 or between the secondary batteries 200 and a housing 100 to be described later.

The buffer pad 300 may be provided to have various degrees of elasticity.

The plurality of buffer pads 300 may be provided to have different degrees of elasticity in one secondary battery module 10. In this case, the buffer pads 300 may be selectively disposed for each degree of elasticity to correspond to the thicknesses of the adjacent secondary batteries 200 so that the buffer pads 300 flexibly compensate for the space when the swelling of the secondary battery 200 occurs to prevent the module from being damaged while occupying a predetermined space so that the adjacent secondary batteries 200 are fixed in position.

For example, the plurality of buffer pads 300 may include at least one first buffer pad having a first degree of elasticity and at least one second buffer pad having a second degree of elasticity less than the first elasticity. Here, the thicknesses of the plurality of buffer pads may be the same as or different from each other. Here, the first degree of elasticity and the second degree of elasticity may be set in various manners.

Specifically, in one secondary battery module 10, each of the first buffer pad and the second buffer pads may be selectively disposed according to the thicknesses of the secondary batteries 200 to be adjacent thereto. In more detail, when the thickness of the secondary battery 200 is relatively thicker than the other secondary battery 200, the second buffer pad may be disposed to be adjacent to the secondary battery 200 that is relatively thicker than the other secondary battery 200.

In addition, when the thickness of the secondary battery 200 is relatively thinner than the other secondary battery 200, the first buffer pad may be disposed to be adjacent to the secondary battery 200 that is relatively thinner than the other secondary battery 200.

In addition, when the one buffer pad 300 is disposed between the two secondary batteries 200, the buffer pads 300 may be selectively disposed for each degree of elasticity by comparing the sum of the thicknesses of the adjacent secondary batteries 200 with a preset value.

For example, if the preset value is 16.82 mm, when the sum of the thicknesses of the adjacent secondary batteries 200 is greater than 16.82 mm, the second buffer pad having a relatively low degree of elasticity may be disposed between the secondary batteries 200, and when the sum of the thicknesses of the secondary batteries 200 is less than 16.82 mm, the first buffer pad having a relatively high degree of elasticity may be disposed between the secondary batteries 200.

The buffer pad 300 may be made of various materials. For example, the material of the buffer pad includes any one of polyurethane (PU), silicone, aerogel, a composite material of polyurethane + mica, a composite material of silicone + mica, and a composite material of aerogel + mica.

In addition, the plurality of buffer pads 300 may be provided to have different colors for each degree of elasticity.

The secondary battery module 10 according to the present invention may further include a housing 100 having an accommodation space therein.

Here, the housing 100 may have any structure as long as the housing has a structure in which the plurality of secondary batteries 200 and the plurality of buffer pads 300 are accommodated in the accommodation space.

For example, when the plurality of secondary batteries 200 are stacked in one direction to form a stack of the secondary batteries 200, the housing 100 may include: a pair of endplates 110 disposed on a front or rear surface of the secondary battery 200 disposed at the outermost side of the stack of the secondary batteries 200; a pair of bolt parts 120 extending along the arrangement direction of the plurality of secondary batteries 200 and coupling the pair of endplates 110 to each other; and a body plate 130 connected to an end of the endplate 110 to provide an accommodation space together with the endplate 110.

When the housing 100 is provided, the buffer pad 300 may be disposed between the endplate 110 and the stack of the secondary batteries 200. In this case, the buffer pad 300 may perform spatial compensation to alleviate the swelling and also serve to electrically insulate the secondary battery 200 from the endplate 110.

The secondary battery module 10 according to the present invention may further include a cooling plate 400 provided between the plurality of secondary batteries 200 in the accommodation space to cool heat emitted from the secondary batteries 200. The cooling plate 400 may be provided as a plate-shaped member having thermal conductivity. A refrigerant passage may be provided in the cooling plate 400, or the cooling plate 400 may be directly or indirectly connected to a cooling device provided with the refrigerant passage to dissipate heat emitted from the secondary battery 200.

Thus, the secondary battery 200, the first buffer pad, the second buffer pad, and the cooling plate 400 may be alternately arranged in the accommodation space of the housing 100.

In addition, the secondary battery module 10 according to the present invention may further include a cartridge (not shown) in which at least one secondary battery 200 is accommodated. In this case, the secondary battery 200 may be accommodated in the cartridge and arranged along one direction in the accommodation space inside the housing 100. In order to prevent the edge part 222 from being damaged while accommodating the secondary battery 200, the cartridge may have a structure including a frame that has a hollow in which the secondary battery 200 is accommodated and surrounds an edge of the edge part 222.

### Secondary battery pack

In the present invention, in a pack of the secondary battery 200 including a plurality of secondary battery modules 10 arranged to be stacked, the secondary battery module 10 include: a plurality of secondary batteries 200 arranged in parallel to each other; and a plurality of buffer pads 300 disposed adjacent to the secondary batteries 200 in an arrangement direction of the plurality of secondary batteries 200, and the plurality of buffer pads 300 may have different thicknesses. In addition, the buffer pads 300 may be selectively inserted according to the thicknesses of the adjacent secondary batteries.

In addition, some of the plurality of buffer pads 300 may provide a secondary battery pack having a thickness different from that of each of the rest of the buffer pads 300.

The secondary battery pack may include a battery management system (BMS), a cooling system, a control system, and the like together with the plurality of secondary battery modules 10. Here, a detailed description of the secondary battery module 10 may be cited from the above description.

### Secondary battery module inspection device

The present invention may provide a secondary battery 200 arranged in parallel to each other; and a secondary battery module inspection device 1000 for inspecting the secondary battery module 10 including a plurality of buffer pad 300 disposed to be adjacent to the secondary batteries 200. Here, a portion of the plurality of secondary batteries 200 may be provided to have a thickness different from that of each of the rest of the secondary batteries 200.

Specifically, the secondary battery module inspection device 1000 may include: a main body 1100; and an inspection unit 1200 inspecting whether assembly failure of the buffer pads 300 occurs, and a portion of the buffer pads 300 may have a thickness and color different from those of each of the rest of the buffer pads 300, and the inspection unit 1200 may detect the color of the buffer pad 300 to inspect whether the assembly failure of the buffer pad 300 occurs based on detected information.

Here, the main body 1100 may be configured to directly or indirectly support a detection part 1210 to be described later so that the detection part 1210 is provided at a position facing the secondary battery module 10.

In addition, the inspection unit 1200 detects the color of the buffer pad 300 to inspect whether assembly failure of the buffer pad 300 occurs based on the detected information and may have various configurations.

Specifically, the inspection unit 1200 may include: a detection part 1210 that detects a color of the buffer pad 300 and thickness data of the secondary battery 200; and a determination part 1220 that determines whether assembly failure of the buffer pad 300 occurs based on the color of the buffer pad 300 and the thickness data of the secondary battery 200.

Specifically, the detection part 1210 is configured to detect the color of the buffer pad 300 and the thickness data of the secondary battery 200 and may have various configurations.

In this case, the detection part 1210 may include a color sensor, which is one of optical sensors, to detect the color of the buffer pad 300, a laser displacement sensor for detecting the thickness data of the secondary battery 200, and the like. In this case, when a barcode storing the thickness data is displayed on a surface of the secondary battery 200, the detection part 1210 may include a barcode reader capable of indirectly deriving the thickness data.

The determination part 1220 determines whether assembly failure of the buffer pad 300 occurs based on the color of the buffer pad 300 and the thickness data of the secondary battery 200 and may have various configurations.

Specifically, the determination part 1220 may determine whether the buffer pad 300 is placed at an appropriate position based on the color value of the buffer pad 300 and the thickness data of the secondary battery 200, which are received from the detection part 1210.

For example, the determination part 1220 may compare the sum of thicknesses of two secondary batteries 200 provided to be adjacent to the one buffer pad 300 with a preset value and confirm the color of the buffer pad 300 to determine whether the buffer pad 300 having an appropriate thickness is disposed between the secondary batteries 200.

Referring to the foregoing description in more detail, when the preset value is 16.82 mm, if the sum of the thicknesses of the adjacent secondary batteries 200 is greater than 16.82 mm, the second buffer pad 300b has to be applied between the secondary batteries 200. In this case, when color information received from the detection part 1210 is the same as color information of the second buffer pad 300b, the determination part 1220 may determine the secondary battery module 10 as a good product, and when the color information received from the detection part 1210 is different from the color information of the second buffer pad 300b (i.e., in case of the color information of the first buffer pad 300a), the determination part 1220 may determine the secondary battery module 10 as assembly failure. The information determined by the determination part 1220 may be transmitted to a user wiredly/wirelessly.

The secondary battery module inspection device 1000 described above is not only used to inspect whether the assembly failure of the secondary battery module 10 occurs after the assembly of the buffer pad 300 is completed, but also is utilized in an apparatus for manufacturing the secondary battery module 10 before the assembly of the buffer pad 300.

That is, in the secondary battery module inspection device 1000, the detection part 1210 may detect the thickness of the secondary battery 200 and the thickness of the buffer pad 300 and compare each of the thicknesses with the preset thickness values so that the appropriate buffer pad 300 is used to be assembled between the secondary batteries 200.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Secondary battery module
100: Housing 110 Endplate
110: Endplate
120: Bolt part
130: Body plate
200: Secondary battery
210: Electrode assembly
220: Battery case
221: Accommodation part
222: Edge part
230: Electrode lead
300: Buffer pad
300a: First buffer pad
300b: Second buffer pad
400: Cooling plate
1000: Secondary battery module inspection device
1100: Main body
1200: Inspection unit
1210: Detection part
1220: Determination part
T1: First thickness
T2: Second thickness
t1: First thickness
t2: Second thickness

## Claims

1. A secondary battery module comprising:
a plurality of secondary batteries arranged in parallel to each other; and
a plurality of buffer pads inserted to be adjacent to the secondary batteries along an arrangement direction of the plurality of secondary batteries,
wherein the plurality of buffer pads are provided to have thicknesses different from each other and are selectively inserted according to thicknesses of the adjacent secondary batteries.

2. The secondary battery module of claim 1, wherein a portion of the plurality of buffer pads has a thickness different from that of each of the rest of the buffer pads.

3. The secondary battery module of claim 1, wherein a portion of the plurality of secondary batteries has a has a thickness different from that of each of the rest of the secondary batteries.

4. The secondary battery module of claim 3, wherein each of the buffer pads are selectively disposed for each thickness to correspond to the thicknesses of the adjacent secondary batteries.

5. The secondary battery module of claim 3, wherein the buffer pad is disposed between the plurality of secondary batteries, and
the buffer pads are selectively disposed for each thickness by comparing the sum of the thicknesses of the adjacent secondary batteries with a preset value.

6. The secondary battery module of claim 1, wherein the plurality of buffer pads comprise:
at least one first buffer pad having a first thickness; and
at least one second buffer pad having a second thickness less than the first thickness.

7. The secondary battery module of claim 6, wherein, when the secondary battery has a thickness that is relatively thicker than the other secondary battery, the second buffer pad is disposed to be adjacent to the secondary battery that is relatively thicker than the other secondary battery, and
when the secondary battery has a thickness that is relatively thinner than the other secondary battery, the first buffer pad is disposed to be adjacent to the secondary battery that is relatively thinner than the other secondary battery.

8. The secondary battery module of claim 6, wherein the first thickness ranges of 1 mm to 2 mm.

9. The secondary battery module of claim 6, wherein the second thickness ranges of 0.1 mm to 1 mm.

10. The secondary battery module of claim 1, wherein a material of each of the buffer pads comprises any one of polyurethane (PU), silicone, aerogel, a composite material of polyurethane + mica, a composite material of silicone + mica, and a composite material of aerogel + mica.

11. The secondary battery module of claim 1, wherein the plurality of buffer pads have different colors for each thickness.

12. The secondary battery module of claim 1, further comprising a housing in which an accommodation space is defined,
wherein the plurality of secondary batteries and the plurality of buffer pads are accommodated in the accommodation space.

13. The secondary battery module of claim 12, further comprising a cooling plate provided between the plurality of secondary batteries inside the accommodation space to dissipate heat emitted from the secondary batteries.

14. A secondary battery pack comprising a plurality of secondary battery modules arranged to be stacked,
wherein each of the secondary battery modules comprises:
a plurality of secondary batteries arranged in parallel to each other; and
a plurality of buffer pads disposed to be adjacent to the secondary batteries along an arrangement direction of the plurality of secondary batteries,
wherein the plurality of buffer pads are provided to have thicknesses different from each other and are selectively inserted according to thicknesses of the adjacent secondary batteries.

15. A secondary battery module comprising:
a plurality of secondary batteries arranged in parallel to each other; and
a plurality of buffer pads inserted to be adjacent to the secondary batteries along an arrangement direction of the plurality of secondary batteries,
wherein the plurality of buffer pads are provided to have different degrees of elasticity and are selectively inserted according to thicknesses of the adjacent secondary batteries.

16. The secondary battery module of claim 15, wherein a portion of the plurality of buffer pads has a degree of elasticity that is different from that of each of the rest of the buffer pads.

17. The secondary battery module of claim 15, wherein a portion of the plurality of secondary batteries has a has a thickness different from that of each of the rest of the secondary batteries.

18. The secondary battery module of claim 17, wherein each of the buffer pads are selectively disposed for each degree of elasticity to correspond to the thicknesses of the adjacent secondary batteries.

19. The secondary battery module of claim 17, wherein the buffer pad is disposed between the plurality of secondary batteries, and
the buffer pads are selectively disposed for each degree of elasticity by comparing the sum of the thicknesses of the adjacent secondary batteries with a preset value.

20. The secondary battery module of claim 15, wherein the plurality of buffer pads comprise:
at least one first buffer pad having a first degree of elasticity; and
at least one second buffer pad having a second degree of elasticity less than the first degree of elasticity.

21. The secondary battery module of claim 20, wherein, when the secondary battery has a thickness that is relatively thicker than the other secondary battery, the second buffer pad is disposed to be adjacent to the secondary battery that is relatively thicker than the other secondary battery, and
when the secondary battery has a thickness that is relatively thinner than the other secondary battery, the first buffer pad is disposed to be adjacent to the secondary battery that is relatively thinner than the other secondary battery.

22. The secondary battery module of claim 15, wherein the plurality of buffer pads have different colors for each degree of elasticity.
